# EUROPEAN PATENT APPLICATION

(11) **EP 4 723 254 A1**
(43) Date of publication of application: **08.04.2026**
(21) Application number: 24840128.3
(22) Date of filing: 12.07.2024
(51) Int. Cl.: H01M 8/04119, B01D 69/08, H01M 8/0662, H01M 8/10

(54) **HOLLOW FIBER MEMBRANE FOR FUEL CELL HUMIDIFIER, AND HUMIDIFIER AND FUEL CELL SYSTEM COMPRISING SAME**

(30) Priority: 12.07.2023 KR 20230090491; 11.07.2024 KR 20240091970
(71) Applicant: Kolon Industries, Inc., Seoul 07793 (KR)
(72) Inventor: OH, Young Seok, Seoul 07793 (KR); LEE, Ah Reum, Seoul 07793 (KR); LEE, Ji Yoon, Seoul 07793 (KR)
(74) Representative: Vossius & Partner Patentanwälte Rechtsanwälte mbB
(86) International application number: PCT/KR2024/010016
(87) International publication number: WO 2025/014318

(57) **Abstract**

The present disclosure relates to a hollow fiber membrane for a fuel cell humidifier, a method of preparing the same, and a humidifier and a fuel cell system which include the hollow fiber membrane, wherein the hollow fiber membrane includes a polymer and an antioxidant, and the antioxidant is disposed on an inner surface and/or an outer surface.

## Description

### Technical Field

The present disclosure relates to a new hollow fiber membrane for a fuel cell humidifier, and a humidifier and a fuel cell system which include the same.

### Background Art

Fuel cells are power-generating cells that convert the chemical energy of hydrogen and oxygen into electrical energy through an electrochemical reaction. Unlike general chemical cells such as dry cells or storage cells, fuel cells have advantages in that the fuel cells may continuously generate electricity as long as hydrogen and oxygen are supplied, and have no heat loss and thus have about twice the efficiency of internal combustion engines.

In addition, since hydrogen and oxygen are used as raw materials to generate water as a product, fuel cells are environmentally friendly power generation devices that do not generate pollutants. Therefore, fuel cells have advantages of being not only environmentally friendly but also reducing concerns about resource depletion due to an increase in energy consumption.

Fuel cells may be classified into polymer electrolyte membrane fuel cells (PEMFCs), phosphoric acid fuel cells (PAFCs), molten carbonate fuel cells (MCFCs), solid oxide fuel cells (SOFCs), and alkaline fuel cells (AFCs).

Among these, PEMFCs are known to be suitable for use in transportation systems because they can operate at lower temperatures and have a higher power density than other fuel cells.

Meanwhile, during driving of PEMFCs, generally, 2 moles of hydrogen react with 1 mole of oxygen in a fuel cell stack to form water. However, when an incomplete reaction occurs, in some cases, byproducts such as peroxides or hydroxyl radicals may be generated.

The peroxides or hydroxyl radicals generated in this way may cause deterioration of a polymer electrolyte membrane in a fuel cell stack, and technologies have been reported in which small amounts of additives, such as inorganic materials, are incorporated into a polymer electrolyte membrane to prevent such deterioration.

However, since pores should be distributed in a polymer electrolyte membrane at a certain level or more to allow ions to pass through the polymer electrolyte membrane, the amount of inorganic materials, such as inorganic particles, for improving durability is limited to a certain value or less.

Accordingly, there is still a need for technologies capable of preventing deterioration of polymer electrolyte membranes even during long-term driving of fuel cells.

### Disclosure of Invention

### Technical Problem

The present disclosure aims to protect a polymer electrolyte membrane from peroxides and/or hydroxyl radicals continuously generated in a fuel cell stack, thereby improving the durability of a fuel cell system.

### SOLUTION TO PROBLEM

According to an aspect, provided is a hollow fiber membrane for a fuel cell humidifier, the hollow fiber membrane including a polymer and an antioxidant, wherein the antioxidant is disposed on an inner surface and/or an outer surface of the hollow fiber membrane.

According to another aspect, provided is a method of preparing a hollow fiber membrane for a fuel cell humidifier, the method including preparing a dope solution for forming a hollow fiber membrane including a polymer and an antioxidant, discharging the dope solution into a coagulation bath through a tubular spinning device, and coagulating, in the coagulation bath, a spinning solution which has been discharged into the coagulation bath, and then winding and drying the spinning solution to obtain the hollow fiber membrane, wherein the antioxidant is disposed on an inner surface and/or an outer surface of the hollow fiber membrane.

According to another aspect, provided is a humidifier for a fuel cell, including the hollow fiber membrane.

According to another aspect, provided is fuel cell system which includes a fuel cell stack including a fuel cell that includes a polymer electrolyte membrane, and the humidifier for a fuel cell, in communication with the fuel cell stack, wherein an antioxidant flows out from the humidifier and flows into the fuel cell stack at a rate of 1 µg/1,000 hr or more.

### Advantageous Effects of Invention

In a hollow fiber membrane according to an aspect, by arranging or dispersing an antioxidant on an inner surface and/or an outer surface of the hollow fiber membrane, during a process in which external air is humidified in the hollow fiber membrane, the antioxidant flows out from the hollow fiber membrane to flow into a fuel cell stack at a rate of 1 µg/1,000 hr or more, thereby sufficiently preventing deterioration of a polymer electrolyte membrane included in a fuel cell within the fuel cell stack to improve durability.

### BRIEF DESCRIPTION OF DRAWINGS

FIGS. 1 and 2 are exploded perspective views of a humidifier for a fuel cell, according to an embodiment of the present disclosure.
FIGS. 3 to 6 are enlarged cross-sectional views of a hollow fiber membrane according to an embodiment of the present disclosure.
FIGS. 7 and FIG. 8 are block diagrams illustrating a configuration of a fuel cell system according to an embodiment of the present disclosure.

### Best Mode for Carrying out the Invention

### Mode for the Invention

Hereinafter, as the present inventive concept allows for various changes and numerous embodiments, specific embodiments will be illustrated in the drawings and described in detail in the written description. However, this is not intended to limit the present inventive concept to particular modes of practice, and it is to be appreciated that all changes, equivalents, and substitutes that do not depart from the spirit and technical scope are encompassed in the present inventive concept.

The terms used herein are merely used to describe specific embodiments and are not intended to limit the present inventive concept. An expression used in the singular encompasses the expression of the plural, unless it has a clearly different meaning in the context. As used herein, it is to be understood that the terms such as "including," "having," and "comprising" are intended to indicate the existence of the features, numbers, steps, actions, components, parts, ingredients, materials, or combinations thereof disclosed in the specification and are not intended to preclude the possibility that one or more other features, numbers, steps, actions, components, parts, ingredients, materials, or combinations thereof may exist or may be added.

When it is described that a certain component is "connected" or "coupled" to another component, it should be understood that the certain component may be directly connected or coupled to the other component, or new other components may resent between the certain component and the other component. On the other hand, when it is described that a certain component is "directly connected" or "directly coupled" to another component, it should be understood that new other components are not present between the certain component and the other component.

Throughout the specification, it will be understood that when a component, such as a layer, a film, a region, or a plate, is referred to as being "on" another component, the component may be directly on the other component or intervening components may be present thereon. Throughout the specification, while such terms as "first," "second," and the like may be used to describe various components, such components should not be limited to the above terms. The above terms are used only to distinguish one component from another.

The term "polymer" as used herein refers to a polymer formed by polymerization of one or more monomer units and has a meaning encompassing polymer resins and polymer macromolecules.

Embodiments set forth herein are merely examples and various changes may be made therein.

According to an aspect, provided is a hollow fiber membrane including a polymer and an antioxidant, wherein the antioxidant is disposed on an inner surface and/or an outer surface.

The antioxidant may be disposed on at least one surface of the inner surface and the outer surface of the hollow fiber membrane and may come into contact with external air passing through a humidifying membrane so that a portion of the antioxidant flows out.

According to an embodiment, the hollow fiber membrane may have a network structure formed of a polymer and may further include an antioxidant within the network structure.

According to an embodiment, the antioxidant may be dispersed and present in a polymer constituting the hollow fiber membrane. For example, the antioxidant may have a particle form and may be dispersed and present in a structure embedded in the polymer. That is, the antioxidant may be dispersed and present within the network structure without forming a bond with a polymer forming a framework of the hollow fiber membrane.

Since the antioxidant does not form a bond with the hollow fiber membrane, during a process in which external air passes through a hollow portion of the hollow fiber membrane, the antioxidant may flow out to be delivered to a fuel cell stack together with humidified air.

In an embodiment, the antioxidant may be configured to flow out from a hollow fiber membrane at a rate of 1 µg/1,000 hr or more. The antioxidant may flow out in such an amount or more, chemical deterioration of a polymer electrolyte membrane in a fuel cell stack caused by an oxidative material may be suppressed.

According to an embodiment, the antioxidant may be included in the hollow fiber membrane through a preparation process to be described below. For example, the antioxidant may be included in the hollow fiber membrane by being mixed with a dope solution during a membrane forming process, the antioxidant may be included into the hollow fiber membrane during a phase inversion process in which the antioxidant is included into a core solution and discharged, or the antioxidant may be included in the hollow fiber membrane by preparing the hollow fiber membrane, and then infiltrating an antioxidant solution into the hollow portion to form an antioxidant coating layer on the inner surface of the hollow fiber membrane.

According to an embodiment, the antioxidant may be in a dispersed form or in a form of a coating layer on at least one surface of the inner surface and the outer surface of the hollow fiber membrane. For example, the antioxidant may have a form in which particles are attached to at least one surface of the inner surface and the outer surface of the hollow fiber membrane, or a plurality of particles form a coating layer.

For example, the particles of the antioxidant may be uniformly distributed on the entire surface not to block pores of the hollow fiber membrane.

According to an embodiment, the antioxidant may be included in an amount of 0.1 to 5 parts by weight with respect to 100 parts by weight of the polymer.

According to an embodiment, the antioxidant may form an antioxidant coating layer disposed on at least one surface of the inner surface and the outer surface of the hollow fiber membrane. In this case, when in contact with external air, the antioxidant coating layer may be configured to allow a certain amount of the antioxidant to flow out. In order for a certain amount of the antioxidant to flow out, the antioxidant should not form a chemical bond with a main polymer of a membrane, and it is advantageous for the antioxidant to be positioned on an inner surface of the membrane. Therefore, when a humidifying membrane is formed, a crosslinking agent or an additive that may cause crosslinking between the antioxidant and the main polymer should be excluded.

For example, the antioxidant coating layer may have a thickness of 1 µm to 50 µm to allow a certain amount of the antioxidant to flow out. When the thickness of the antioxidant coating layer is less than 1 µm, it may be difficult to obtain a sufficient outflow amount of the antioxidant through contact with external air, and when the thickness exceeds 50 1 µm, since the antioxidant coating layer serves as a resistance layer to the flow of external air, sufficient moisture exchange with the external air may be difficult.

According to an embodiment, the particles of the antioxidant or the antioxidant coating layer may cover the entirety or a portion of the inner surface or the outer surface of the hollow fiber membrane.

According to an embodiment, the antioxidant may be included in an amount of 0.01 to 5 parts by weight with respect to 100 parts by weight of the polymer forming the hollow fiber membrane.

When the antioxidant is included in an amount of less than 0.01 parts by weight, it may be insufficient to prevent deterioration of the hollow fiber membrane caused by peroxides or hydroxyl radicals generated during a fuel cell reaction, and when the antioxidant is included in an amount of more than 5 parts by weight, pores of the hollow fiber membrane may be blocked to degrade moisture exchange performance, thereby degrading a membrane humidifier function.

According to an embodiment, the antioxidant may include a phenol-based antioxidant, an amine-based antioxidant, a metal-based antioxidant, an organo-metallic antioxidant, a sulfur-based or phosphorus-based antioxidant, or a combination thereof.

For example, the phenol-based antioxidant may include Irganox 1010 (pentaerythritol tetrakis[3-(3,5-di-t-butyl-4-hydroxyphenyl)propionate manufactured by BASF SE), Irganox 1076 (octadecyl-3-(3,5-di-t-butyl-4-hydroxyphenyl)propionate manufactured by BASF SE), Irganox 1330 (3,3',3",5,5',5"-hexa-tert-butyl-α,α',α"-(mesitylene-2,4,6-triyl)tri-p-cresol manufactured by BASF SE), Irganox 3114 (1,3,5-tris(3,5-di-tert-butyl-4-hydroxybenzyl)-1,3,5-triazine-2,4,6(1H,3H,5H)-trione manufactured by BASF SE), Irganox 3790 (1,3,5-tris((4-tert-butyl-3-hydroxy-2,6-xylyl)methyl)-1,3,5-triazine-2,4,6(1H,3H,5H)-trione manufactured by BASF SE), Irganox 1035 (thiodiethylene bis[3-(3,5-di-tert-butyl-4-hydroxyphenyl)propionate] manufactured by BASF SE), Irganox 1135 (benzenepropanoic acid, 3,5-bis(1,1-dimethylethyl)-4-hydroxy-C7-C9 side chain alkyl ester manufactured by BASF SE), Irganox 1520L (4,6-bis(octylthiomethyl)-o-cresol manufactured by BASF SE), Irganox 3125 (manufactured by BASF SE), Irganox 565 (2,4-bis(n-octylthio)-6-(4-hydroxy-3',5'-di-tert-butylanilino)-1,3,5-triazine manufactured by BASF SE), ADEKAstab^{®} AO-80 (3,9-bis[2-(3-(3-tert-butyl-4-hydroxy-5-methylphenyl)propanoyloxy)-1,1-dimethylethyl]-2,4,8,10-tetraoxaspiro[5.5]undecane manufactured by ADEKA Corporation), Smilizer^{®} BHT, GA-80, and GS (all manufactured by Sumitomo Chemical Co., Ltd.), Cyanox^{®} 1790 (manufactured by Cytec Co., Ltd.), and Vitamin E (manufactured by Eisai Co., Ltd.), or any combination thereof.

The amine-based antioxidant may include phenyl-α-naphthylamine, phenyl-β-naphthylamine, N,N'-diphenyl-p-phenylenediamine, N,N'-di-naphthyl-p-phenylenediamine, a hindered amine light stabilizer (HALS)-based compound, or a combination thereof.

For example, the phosphorus-based antioxidant may include tris(2,4-di-t-butylphenyl)phosphite (Irgafos 168), tris[2-[[2,4,8,10-tetra-t-butyldibenzo[d,f][1,3,2]dioxaphosphepin-6-yl]oxy]ethyl]amine (Irgafos 12), bis(2,4-bis(1,1-dimethylethyl)-6-methylphenyl) ethyl phosphite (Irgafos 38), Adekastab 329K, Adekastab PEP36, Adekastab PEP-8, Sandstab P-EPQ, Weston 618, Weston 619G, Ultranox 626, (6-[3-(3-t-butyl-4-hydroxy-5-methylphenyl)propoxy]-2,4,8,10-tetra-t-butyldibenzo[d,f][1,3,2]dioxaphosphepin) (Smilizer GP), or a combination thereof.

For example, the metal-based antioxidant may include cerium, nickel, tungsten, ruthenium, palladium, silver, rhodium, cesium, zirconium, cobalt, chromium, yttrium, manganese, iron, molybdenum, lead, vanadium, titanium, niobium, lanthanum, an ion thereof, an oxide thereof, a salt thereof, or any mixture thereof.

For example, the organo-metallic antioxidant may include a Ce-crown complex, a Ce-phosphoric acid complex, a Ce-bypyridine, or any mixture thereof.

For example, the sulfur-based antioxidant may include dilaurylthiodipropionate (DLTDP), distearylthiodipropionate (DSTDP), ditridecylthiodipropionate (DMTDP), bis(2-methyl-4-(3-alkylthio)-propionyloxy)-5-tert-butylphenol sulfide, tetrakis(methylene-3-(laurylthio)propionate)methane, or a combination thereof.

According to an embodiment, the hollow fiber membrane may include a polymer, and the polymer may be selected from known polymers suitable for forming a hollow fiber membrane. For example, the polymer may include a polyvinylidene fluoride (PVDF)-based polymer, a polysulfone-based polymer, sulfonated polysulfone, cellulose acetate, cellulose triacetate, polymethyl methacrylate, Nafion, a polystyrene (PS)-based polymer, a polytetrafluoroethylene (PTFE)-based polymer, a perfluorosulfonic acid (PFSA)-based polymer, a polyphenylsulfone (PPSU)-based polymer, a polyethersulfone (PES)-based polymer, a polyacrylonitrile (PAN)-based polymer, a polyetherimide (PEI)-based polymer, a polyimide (PI)-based polymer, or any combination of the above-described polymers.

For example, the polymer may include a PS-based polymer.

Thee hollow fiber membrane may include at least one of the polymers listed above as a main polymer and may further include an auxiliary polymer in consideration of the desired physical properties of the hollow fiber membrane. For example, the auxiliary polymer is polyvinylpyrrolidone.

According to an embodiment, the polymer may be included in an amount of 90 parts by weight or more and less than 100 parts by weight or 95 to 99.999 parts by weight with respect to 100 parts by weight of the hollow fiber membrane.

According to an embodiment, the auxiliary polymer may be included in an amount of 5 to 20 parts by weight with respect to 100 parts by weight of the hollow fiber membrane.

According to an embodiment, the hollow fiber membrane may have a thickness of 0.5 nm to 1 mm.

According to an embodiment, the hollow fiber membrane may further include an additive such as a surfactant, a hydrophilic organic compound, a hydrophilic polymer, or a crosslinking agent.

For example, the additive may include at least one of polyethylene glycol, glycerin, diethyl glycol, triethylene glycol, ethanol, polyvinylpyrrolidone, water, zinc chloride, and lithium chloride.

The additive may be selected and added in an appropriate amount within a range that does not impair the original physical properties of the hollow fiber membrane. It will be apparent to those of ordinary skill in the art that other known materials may also be used in the preparation of the hollow fiber membrane.

According to an aspect, provided is a method of preparing a hollow fiber membrane for a fuel cell humidifier, the method including providing a hollow fiber membrane configured to allow an antioxidant to flow out.

A humidifier for a fuel cell supplies humidified air to a fuel cell stack. In this case, when impurities are included in the humidified air, the impurities may cause a reduction in lifespan of a fuel cell. Therefore, it is necessary to suppress the elution of impurities caused by the decomposition of a hollow fiber material. Since hollow fibers are inherently formed of organic polymers, when the hollow fibers are exposed to a high-temperature and high-humidity air generated from a stack during driving of a fuel cell, a polymer may be deformed or ruptured, or various impurity ions may be generated due to polymer decomposition. These impurities may be delivered into a stack to cause a degradation in performance of a fuel cell stack.

To solve these problems and increase the durability of a hollow fiber membrane, attempts have been made to add a fluorine-based material as a polymer or provide a durable coating layer on a surface of the hollow fiber membrane. However, the addition of a fluorine-based material and the provision of a durable coating layer still have limitations such as impairing the moisture exchangeability of a hollow fiber membrane or reducing heat resistance.

Accordingly, while conducting research with a focus on materials that cause decomposition of a hollow fiber membrane, the present inventors have conducted research on a method of fundamentally removing an oxidative material flowing into a membrane humidifier from a fuel cell stack together with high-temperature and high-humidity air. In this regard, since injecting a large amount of an antioxidant into a fuel cell stack to remove an oxidative material generated in the fuel cell stack may act as impurities in the fuel cell stack and reduce efficiency, based on the insight that when a hollow fiber membrane included in a fuel cell humidifier is configured to allow a certain amount of antioxidant to flow out for a long time, the antioxidant may be continuously supplied to the fuel cell stack and contribute to the removal of the oxidative material, the present invention has been completed.

According to an embodiment, the providing of the hollow fiber membrane configured to allow the antioxidant to flow out may include preparing a dope solution for forming a hollow fiber membrane.

According to an embodiment, the method may include preparing the dope solution by mixing the polymer and the antioxidant in an organic solvent, wherein a spinning solution is obtained by mixing the antioxidant in an amount of 0.01 to 5 parts by weight with respect to 100 parts by weight of the polymer. In this case, the organic solvent used in the preparation of the dope solution may be a third solvent to be described below, for example, N-methyl-2-methylpyrrolidone.

The solvent may include at least one of a first solvent, a second solvent, and the third solvent. For example, the solvent may be a mixed solvent including two types of solvents of the first solvent, the second solvent, and the third solvent.

The first solvent may be a solvent that may not dissolve a polymer at room temperature (for example, 23 °C to 25 °C) but may dissolve the polymer at a high temperature (for example, 80 °C or more), and may include butanol, isobutanol, octanol, pentanol, isopentanol, dimethyl phthalate, diethyl phthalate, dibutyl phthalate, dioctyl phthalate, polyoxylethylene octylphenyl ether, or a combination thereof.

The second solvent may be a solvent that may not dissolve the polymer, and may include water, methanol, ethanol, isopropanol, acetone, hexane, pentane, benzene, toluene, carbon tetrachloride, o-dichlorobenzene, polyethylene glycol, or a combination thereof.

The third solvent may be a solvent that may dissolve the polymer even at room temperature, and may include N-methyl-2-pyrrolidone, dimethyl sulfoxide, dimethylacetamide, dimethylformamide, methyl ethyl ketone, tetrahydrofuran, tetramethylurea, or trimethyl phosphate.

Those of ordinary skill in the art may use any one of the first solvent, the second solvent, and the third solvent or a mixture of two or more solvents thereof in consideration of the characteristics of a polymer raw material and the preparation of a hollow fiber membrane having desired physical properties.

According to an embodiment, when the solvent is a mixed solvent of two types of solvents, a mixing ratio of the solvents may be in a range of 1:9 to 9:1 by weight, but is not limited thereto, and those of ordinary skill in the art may select an appropriate range in consideration of the amounts of a polymer and an antioxidant, the viscosity of a spinning solution, the porosity of a hollow fiber membrane, and the physical properties of a final hollow fiber membrane.

According to an embodiment, the spinning solution may include a polymer forming a framework of the hollow fiber membrane, an antioxidant, and a solvent, and may further include an additive as needed. The spinning solution has a structure in which a solvent is removed during a process of forming a hollow fiber membrane, and a final product contains an antioxidant in a polymer framework.

According to an embodiment, an amount of the polymer included in the spinning solution may be in a range of 15 to 25 parts by weight with respect to 100 parts by weight of the total of the spinning solution. For example, the amount of the polymer included in the spinning solution may be in a range of 16 to 24 parts by weight, 17 to 23 parts by weight, 18 to 22 parts by weight, or 19 to 21 parts by weight.

According to an embodiment, an amount of the antioxidant included in the spinning solution may be in a range of more than 0 to 5 parts by weight or 0.001 to 5 parts by weight with respect to 100 parts by weight of the polymer forming the framework of the hollow fiber membrane.

According to an embodiment, a temperature at which a polymer and an antioxidant, and optionally an additive, are mixed in a solvent in the obtaining of the spinning solution may be appropriately selected at room temperature or a high temperature in consideration of the used polymer, antioxidant, additive, and solvent.

According to an embodiment, a time required to mix the spinning solution may be a time taken for a polymer, an antioxidant, and any additive to be sufficiently dissolved and/or dispersed in a solvent.

According to an embodiment, the spinning solution may have a viscosity of 5,000 cps to 50,000 cps at a temperature of 35 °C. When the viscosity of the spinning solution satisfies the above range, the spinning solution may be smoothly discharged through a spinneret without blockage.

In order to maintain the viscosity of the spinning solution within the above range, a temperature of a spinning nozzle may be adjusted to a certain temperature or more. Alternatively, if necessary, the spinning solution may further include a viscosity modifier to adjust viscosity.

According to an embodiment, the spinning solution may further include an additive in consideration of the membrane-forming properties and porosity of the hollow fiber membrane, the dispersibility of the antioxidant, and the viscosity of the spinning solution.

For example, the additive may include at least one of polyethylene glycol, glycerin, diethyl glycol, triethylene glycol, ethanol, polyvinylpyrrolidone, water, zinc chloride, and lithium chloride.

According to an embodiment, discharging of the spinning solution into a coagulation bath may include discharging the discharged solution using a tubular spinning device such as a double-tubular spinning device or a triple-tubular spinning device, but one or more embodiments are not limited to such a tubular type. Any discharge method capable of forming a hollow form may be used without limitation.

According to an embodiment, when the spinning solution is discharged into the coagulation bath through the double-tubular spinning device, compositions of the spinning solutions discharged from respective tubes of the double-tubular device may be the same or different. For example, when the spinning solution is discharged using the triple-tubular spinning device, compositions of the spinning solutions passing through respective tubes may be the same or different. For example, when the triple-tubular spinning device is used, compositions of the spinning solutions passing through tubes disposed at inner and outer sides of a tubular structure may be the same, and only a composition of the spinning solution passing through an intermediate tube between the inner side and the outer side may be different.

According to an embodiment, in the discharging of the spinning solution into the coagulation bath, a spinning temperature may be set to a temperature that is greater than or equal to a temperature for mixing a spinning solution. In this case, when a multi-tubular spinneret is used, temperatures of individual spinnerets may be set differently so that the spinning solution may be optimally discharged at an appropriate temperature.

According to an embodiment, in the discharging of the spinning solution into the coagulation bath, a discharge speed may be in a range of 5 to 100 g/min.

According to an embodiment, when the spinning solution is discharged through a tubular nozzle, a core solution may be simultaneously discharged into an inner hollow portion of a tube. The core solution may include a mixed solution of the second solvent and the third solvent.

According to an embodiment, the core solution may be prepared by mixing the second solvent and the third solvent in a volume ratio of 3:7 to 7:3. When the core solution satisfies the volume ratio of the above range, the antioxidant contained in the spinning solution may be incorporated into the hollow fiber membrane during a phase inversion process of a spinning material.

According to an embodiment, the core solution may further include an antioxidant. Since the core solution further includes the antioxidant, the antioxidant may be dispersed on the inner surface of the hollow fiber membrane through phase separation during a hollow fiber membrane formation process. As a result, the antioxidant may be dispersed and present at a high concentration on the inner surface of the hollow fiber membrane. As described above, when the core solution including the antioxidant is simultaneously discharged, a spinning solution may include a small amount of the antioxidant or may contain no antioxidant.

According to an embodiment, a spinning material discharged from the spinning device may come into contact with a coagulation solution in the coagulation bath through an air gap.

The air gap may be an area in which the spinning material comes into contact with air, and artificial cooling air may be supplied in consideration of the physical properties of the spinning material. For example, a length of the air gap may be set to 0.1 cm to 50 cm. The air gap is a section in which primary phase inversion occurs, and phase inversion occurs through exchange of moisture in the atmosphere with an organic solvent in a spinning solution. When the length of the air gap satisfies the above range, sufficient phase inversion may occur to obtain a hollow fiber membrane having a desired pore structure.

The spinning material passes through the air gap and comes into contact with the coagulation solution included in the coagulation bath, thereby solidifying to form a porous hollow fiber membrane.

According to an embodiment, the coagulation bath may be provided as one coagulation bath, but one or more embodiments are not limited thereto. The coagulation bath may be configured such that two or more coagulation baths are consecutively disposed. When there are two or more coagulation baths, coagulation solutions used in respective coagulation baths may be the same or different.

According to an embodiment, the coagulation solution included in the coagulation bath serves to coagulate a discharged solution, which is discharged through a spinneret, into the form of a hollow fiber membrane. In this case, those of ordinary skill in the art may appropriately select and use a used coagulation solution from known coagulation solutions in consideration of the porosity of the hollow fiber membrane, the pore structure of the hollow fiber membrane, and the like.

For example, the second solvent such as an acidic solution or water may be used as the coagulation solution.

According to an embodiment, the hollow fiber membrane obtained through the coagulation bath may undergo post-treatment.

According to an embodiment, the post-treatment may include performing chemical treatment and/or physical treatment.

For example, the chemical treatment in the post-treatment may be performed to remove and dry a coagulation solution included in pores after the hollow fiber membrane is formed, and may include rinsing, washing, hot water treatment, or the like. If necessary, a solution used for rinsing, washing, hot water treatment, or the like may further include an antioxidant.

For example, the physical treatment in the post-treatment may further include a stretching or shrinking process of controlling the size and shape of the pores inside the hollow fiber membrane to improve the strength and durability of the hollow fiber membrane.

According to an embodiment, after the hollow fiber membrane is formed, post-treatment in which a solution in which an antioxidant is dissolved in the second solvent is introduced into a hollow portion of a hollow fiber and then dried may be performed. Through such post-treatment, an antioxidant coating layer may be provided on the inner surface of the hollow fiber membrane. The post-treatment in which the antioxidant coating layer is provided on the inner surface of the hollow fiber membrane may be additionally performed in addition to a process described above, or after a hollow fiber membrane with or without an antioxidant is formed, the post-treatment may also be performed for the purpose of preparing a selective antioxidant coating layer only on an inner surface thereof.

In a hollow fiber membrane for a fuel cell humidifier prepared through a process described above, since an antioxidant is not bonded to a hollow fiber membrane through a crosslinker or binder and is dispersed inside the hollow fiber membrane or forms a coating layer on an inner surface, during a moisture exchange process of the hollow fiber membrane, the antioxidant may be easily eluted in external air.

According to another aspect, provided is a humidifier including the hollow fiber membrane.

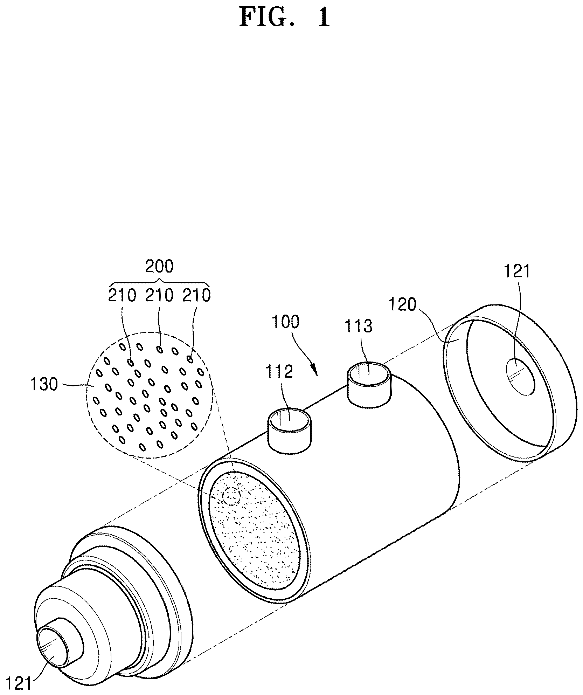

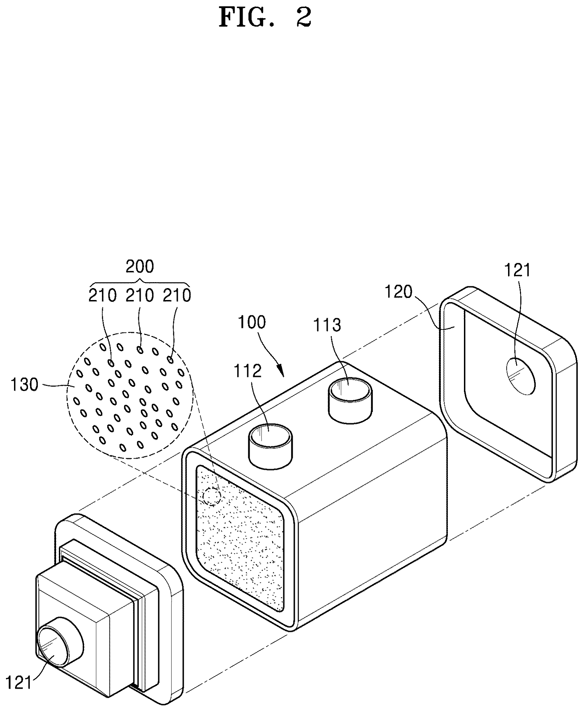

For the hollow fiber membrane, reference may be made to the above description, and hereinafter, the humidifier will be described with reference to FIGS. 1 and 2.

FIGS. 1 and 2 are perspective views of a humidifier 100 for a fuel cell, according to an embodiment of the present disclosure.

As shown in FIGS. 1 and 2, the humidifier 100 for a fuel cell of the present disclosure includes a middle case 110, a cap case 120, a fixing portion 130, and a hollow fiber membrane bundle 200.

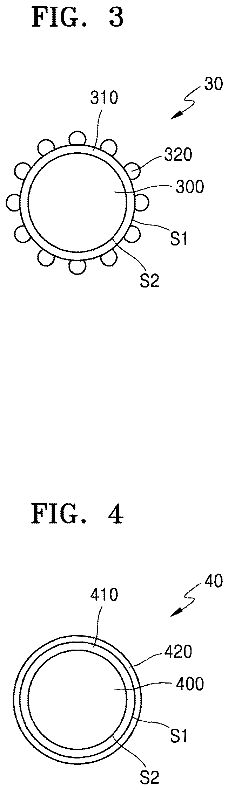

Here, the hollow fiber membrane bundle 200 may have antioxidant particles distributed on a surface of each hollow fiber membrane or may include an antioxidant coating layer on the surface. For an enlarged view of the surface of the hollow fiber membrane, reference is made to FIGS. 3 and 4.

The middle case 110 is coupled to the cap case 120 to form an exterior of the humidifier 100 for a fuel cell. The middle case 110 and the cap case 120 may consist of hard plastic such as polycarbonate, or metal. A cross section of the middle case 110 and the cap case 120 in a width direction may have a circular shape as shown in FIG. 1 or a polygonal shape as shown in FIG. 2. The polygonal shape may be a quadrangular shape, a square shape, a trapezoid shape, a parallelogram shape, a pentagonal shape, a hexagonal shape, or the like., and the polygonal shape may have rounded corners. In addition, the circular shape may be an oval shape.

In the middle case 110, a second fluid inlet 112 through which a second fluid is supplied and a second fluid outlet 113 through which the second fluid is discharged are each formed.

In FIGS. 1 and 2, a plurality of hollow fiber membranes 210 are illustrated as being disposed in the middle case 110 in the form of a single hollow fiber membrane bundle 200, but the hollow fiber membranes 210 may also be disposed in the middle case 110 while being divided and accommodated in two or more cartridges.

A fluid inlet/outlet 121 is formed in the cap case 120. The fluid inlet/outlet 121 formed in one of the cap cases 120 connected to opposite end portions of the middle case 110 serves as the first fluid inlet, and the fluid inlet/outlet 121 formed in the other one serves as the first fluid outlet. A first fluid flowing in through the fluid inlet/outlet 121 serving as the first fluid inlet passes through the internal channels (that is, lumens) of the hollow fiber membranes 210 accommodated inside the middle case 110 and then is discharged through the fluid inlet/outlet 121 serving as the first fluid outlet.

End portions of the hollow fiber membranes 210 are potted in the fixing portion 130. The fixing portion 130 binds the hollow fiber membranes 210 and fills gaps between the hollow fiber membranes 210 and gaps between the hollow fiber membranes 210 and the middle case 110. Thus, each of the opposite end portions of the middle case 110 is blocked by the fixing portion 130, and a passage through which the second fluid passes is formed therein. A material of the fixing portion 130 is known, and a detailed description thereof is omitted herein.

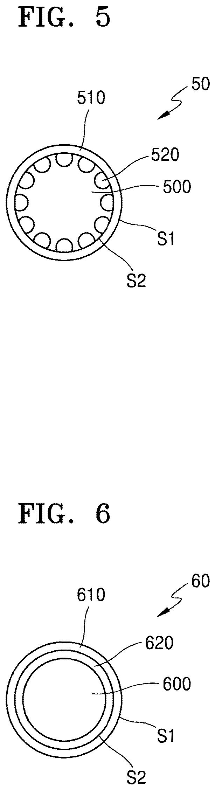

FIGS. 3 to 6 are enlarged cross-sectional views illustrating a single hollow fiber in a hollow fiber membrane bundle, according to an embodiment of the present disclosure. The enlarged views of FIGS. 3 to 5 illustrate an aspect in which antioxidant particles or an antioxidant coating layer are disposed only on an outer surface of the hollow fiber membrane according to an embodiment of the present disclosure, but one or more embodiments are not necessarily limited thereto. An aspect in which antioxidant particles or an antioxidant coating layer are provided on an inner surface of the hollow fiber membrane or on both the inner surface and the outer surface also corresponds to an embodiment of the present disclosure.

Referring to FIGS. 3 to 6, hollow fiber membranes 30, 40, 50, and 60 include cavities 300, 400, 500, and 600, and the cavities serve as passages through which air moves and sites in which moisture exchange occurs. The hollow fiber membrane includes an inner surface S2 which is a surface facing the cavity and an outer surface S1 which faces the outside of the hollow fiber membrane. The hollow fiber membrane has a thickness region 310, 410, 510, or 610 between the inner surface S2 and the outer surface S1, and although not shown, the thickness region 310, 410, 510, or 610 has a porous structure. The porosity of the thickness region may be configured to allow moisture exchange between wet air provided from a fuel cell stack and dry air provided from external air. Antioxidant particles 320 or 520 or an antioxidant coating layer 420 or 620 including antioxidant particles is provided on the outer surface S1 or the inner surface S2 of the hollow fiber membrane 30, 40, 50, or 60. In this case, the antioxidant particles 320 or 520 and the antioxidant coating layer 420 or 620 may be provided in an amount that does not close pores disposed in the thickness region 310, 410, 510, or 610. In addition, the antioxidant particles 320 or 520 and the antioxidant coating layer 420 or 620 may be disposed not to close a gap between adjacent hollow fiber membranes when the hollow fiber membrane 30, 40, 50, or 60 forms a bundle. That is, a thickness of the antioxidant coating layer 420 or 620 is configured not to exceed half a width of the gap between the hollow fiber membranes in the hollow fiber membrane bundle, and the antioxidant particles 320 or 520 are provided to be uniformly dispersed on the surface.

Although not shown, in addition to those shown in FIGS. 3 to 6, a structure in which antioxidant particles and an antioxidant coating layer are mixed on an inner surface or an outer surface may also be understood by those skilled in the art, and thus a redundant description thereof is omitted herein.

According to another aspect, provided is a fuel cell system including a fuel cell stack which includes a fuel cell including a polymer electrolyte membrane, and a humidifier which communicates with the fuel cell stack, wherein an antioxidant flows out from the humidifier and flows into the fuel cell stack at a rate of 1 µg/1,000 hr or more.

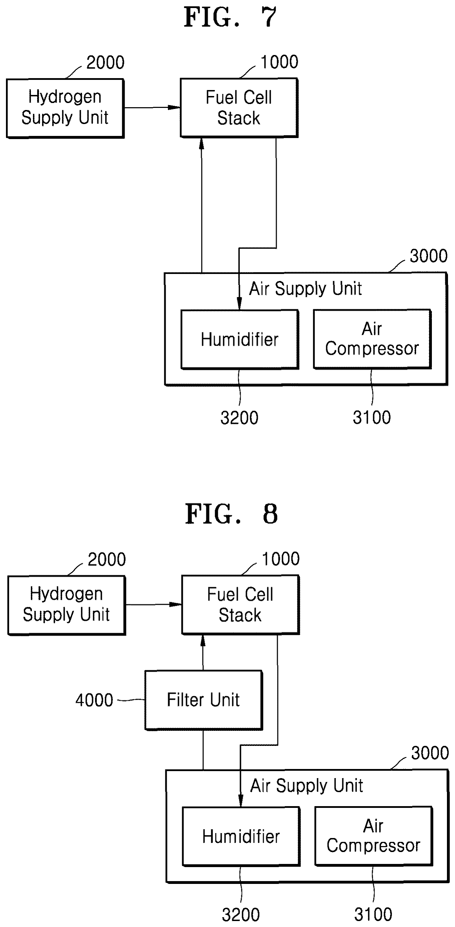

Referring to FIG. 7, a fuel cell system according to an embodiment of the present disclosure includes a fuel cell stack 1000, a hydrogen supply unit 2000, and an air supply unit 3000.

The fuel cell stack 1000 generates heat and steam by reacting hydrogen supplied from the hydrogen supply unit 2000 with oxygen supplied from the air supply unit 3000.

The fuel cell stack 1000 may include a membrane-electrode assembly, an electrolyte membrane, a catalyst layer, electrodes of a cathode and an anode, a gas diffusion layer, a separator, and a gasket, and each component may be manufactured through a known method using known materials.

The fuel cell stack 1000 generates electricity through a combination reaction of hydrogen and oxygen. Specifically, in the fuel cell stack 1000, hydrogen is supplied to the anode, and oxygen is supplied to the cathode. Hydrogen ions are generated at the anode through an oxidation reaction of hydrogen, and electrons generated at this time move to the cathode through an electric wire. Hydrogen ions move to the cathode through the electrolyte membrane and come into contact with oxygen to form water vapor.

Since a reduction reaction of oxygen at a cathode of a polymer electrolyte fuel cell proceeds as an intermediate reaction for forming hydrogen peroxides, hydrogen peroxides or hydroxyl radicals may be generated at the cathode. In addition, at an anode of the polymer electrolyte fuel cell, as oxygen molecules permeate through a polymer electrolyte membrane, hydrogen peroxides or hydroxyl radicals may also be generated at the anode. Hydrogen peroxides or hydroxyl radicals thus generated may cause deterioration of polymer electrolyte membranes that are vulnerable to oxidative materials.

As an effort to prevent such degradation of a polymer electrolyte membrane, a method of introducing radical scavengers onto a surface of the polymer electrolyte membrane has been proposed, but when excessive amounts of radical scavengers are used to improve durability, there have been problems in that pores in an ion exchange membrane are blocked to degrade ion exchange capacity. Furthermore, during driving of a fuel cell, radical scavengers present on a surface of the polymer electrolyte membrane have been lost, which degrades durability of a membrane to make it difficult to achieve sufficient durability and lifetime characteristics.

The inventors of the present disclosure have repeated extensive research to solve a degradation in durability of a fuel cell caused by hydrogen peroxides or hydroxyl radicals generated in a fuel cell stack and have completed the present invention based on the insight that when air including an antioxidant is continuously supplied from a humidifier 3200 included in the air supply unit 3000 provided at an upstream side of a fuel cell stack, the durability and lifetime characteristics of a fuel cell are achieved.

Specifically, an antioxidant flows out from a hollow fiber membrane included in the humidifier 3200 at a rate of 1 µg/1,000 hr or more and flows into air flowing into the fuel cell stack.

The hydrogen supply unit 2000 supplies stored hydrogen to the fuel cell stack 1000. Any hydrogen supply unit may be used without limitation as long as the hydrogen supply unit may supply hydrogen to a fuel cell stack.

The air supply unit 3000 includes an air compressor 3100 that compresses external air to generate a first fluid, and the humidifier 3200 that humidifies the first fluid and delivers the first fluid to the fuel cell stack.

The air compressor 3100 receives external air and supplies the compressed first fluid into the humidifier. The air compressor 3100 may be a device that compresses a fluid such as air and may include, for example, a blower, a compressor, and the like.

If necessary, a filter may be additionally installed in front of an inlet of the air compressor to block the ingress of contaminants, or a separate air filter may be provided.

The humidifier 3200 receives compressed air from the air compressor 3100 and then humidifies the air to supply the humidified air to the fuel cell stack.

The humidifier 3200 allows moisture exchange between air from external air and vapor generated from the fuel cell stack 1000, and supplies the humidified air into the fuel cell stack 1000.

According to another aspect, a fuel cell system includes a fuel cell stack 1000, a hydrogen supply unit 2000 for supplying hydrogen to the stack, an air supply unit 3000 for supplying air to the stack, wherein the air supply unit includes an air compressor 3100 and a humidifier 3200, and a filter unit which is disposed on a path along which external air passing through the humidifier 3200 moves to the fuel cell stack and is configured to remove peroxides and/or hydroxyl radicals.

The fuel cell system will be described with reference to FIG. 8.

In a system of FIG. 8, for the fuel cell stack 1000 and the hydrogen supply unit 2000, reference is made to the descriptions with reference to FIG. 7, and the contents of the humidifier 3200 described with reference to FIG. 7 are equally applied to the air supply unit 3000, except that a hollow fiber membrane included in the humidifier 3200 does not include an antioxidant.

A filter unit 4000 may be disposed between the humidifier 3200 and the fuel cell stack 1000. Specifically, the filter unit 4000 may be disposed adjacent to an outlet of external air (for example, a first fluid) passing through the humidifier, may be disposed adjacent to an inlet through which the first fluid flows into the fuel cell stack, or may be disposed in a path along which the first fluid moves between the humidifier and the fuel cell stack.

The filter unit 4000 may include a porous substrate, and an antioxidant provided on a surface of the porous substrate.

The porous substrate may include a porous nonwoven fabric. For example, the surface of the porous substrate includes a membrane having an average pore size of 50 nm to 10 µm. The porous substrate may optionally include any one of a hydrophilic membrane and a hydrophobic membrane. For example, without limitation, the porous substrate may ay include a membrane including a thermoplastic polymer such as polyethylene, polypropylene, 1-octene, styrene, a polyolefin (co)polymer, polyamide, poly-1-butene, poly-4-methyl-1-pentene, polyether sulfone, ethylene tetrafluoroethylene, PVDF, polysulfone, polyacrylonitrile, polyamide, cellulose acetate, cellulose nitrate, regenerated cellulose, polyvinyl chloride, polycarbonate, polyethylene terephthalate, PI, PTFE, ethylene chlorotrifluoroethylene, or a combination thereof.

The porous substrate may include any known substrate having a mesh shape.

The antioxidant may be provided on one surface or opposite surfaces of the porous substrate. For example, the antioxidant may be provided on the opposite surfaces of the porous substrate, and a concentration of the antioxidant provided on a first surface facing the fuel cell stack 1000 may be higher than a concentration of the antioxidant provided on a second surface opposite the first surface.

For the antioxidant, reference is made to the above description.

Hereinafter, an embodiment of the present disclosure will be described through examples and comparative examples, and the scope of the present disclosure is not intended to be limited to the examples.

### (Examples)

### Example 1

A dope stock solution was prepared by mixing 20 wt% of PS, 6 wt% of polyvinylpyrrolidone (PVP), and 1 wt% of antioxidant (Irganox 1010) with a solvent of 73 % NMP (NMP). A core solution was prepared by mixing NMP and ethanol in a volume ratio of 6:4. A spinning material was immersed in a coagulation bath containing a coagulation solution by discharging the dope stock solution through an outer tube of a double-tubular nozzle and discharging the core solution through an inner tube. The spinning material came into contact with the coagulation solution in the coagulation bath and was formed into a hollow fiber membrane. In this case, a mixture of water and polyethylene glycol (PEG) in a 1:1 ratio was used as the coagulation solution, and a temperature was adjusted to 40 °C. The hollow fiber membrane that passed through the coagulation bath was washed with water at a temperature of 40 °C in a washing bath and then dried to obtain a hollow fiber membrane. In this case, the hollow fiber membrane had a thickness of 150 µm.

### Comparative Example 1

A dope stock solution was prepared by mixing 20 wt% of PS, 6 wt% of PVP, and 1 wt% of antioxidant (Irganox 1010) with a solvent of 73 % NMP. A core solution was prepared by mixing NMP and ethanol in a volume ratio of 75:25. A spinning material was immersed in a coagulation bath containing a coagulation solution by discharging the dope stock solution through an outer tube of a double-tubular nozzle and discharging the core solution through an inner tube. The spinning material came into contact with the coagulation solution in the coagulation bath and was formed into a hollow fiber membrane. In this case, a mixture of water and PEG in a 1:1 ratio was used as the coagulation solution, and a temperature was adjusted to 40 °C. The hollow fiber membrane that passed through the coagulation bath was washed with water at a temperature of 40 °C in a washing bath and then dried to obtain a hollow fiber membrane. In this case, the hollow fiber membrane had a thickness of 150 µm.

### Comparative Example 2

A dope stock solution was prepared by mixing 20 wt% of PS, 6 wt% of PVP, and a solvent of 74 % NMP. A core solution was prepared by mixing NMP and ethanol in a volume ratio of 6:4. A spinning material was immersed in a coagulation bath containing a coagulation solution by discharging the dope stock solution through an outer tube of a double-tubular nozzle and discharging the core solution through an inner tube. The spinning material came into contact with the coagulation solution in the coagulation bath and was formed into a hollow fiber membrane. In this case, a mixture of water and PEG in a 1:1 ratio was used as the coagulation solution, and a temperature was adjusted to 40 °C. The hollow fiber membrane that passed through the coagulation bath was washed with water at a temperature of 40 °C in a washing bath and then dried to obtain a hollow fiber membrane. In this case, the hollow fiber membrane had a thickness of 150 µm.

### Evaluation Example 1

Humidifier modules including the hollow fiber membranes prepared in Example 1 and Comparative Example 1 were manufactured and mounted on a fuel cell system. Before the humidifier modules were driven, and after the humidifier modules were driven for 1,000 hours, an amount of an antioxidant remaining in the hollow fiber membrane was measured through the following method and shown in Table 1 below.

### [Method of measuring amount of antioxidant]

The amount of the antioxidant was measured using ¹H-NMR. The formed hollow fiber membrane was dissolved in DMSO-D6 and measured, and the total amount was calculated by comparing an integral ratio of a proton peak of a main polymer with that of a proton peak of the antioxidant.

**[Table 1]**

| | Before driving of fuel cell, per 1 g of humidifying membrane | After 1,000 hours of driving, per 1 g of humidifying membrane |
|---|---|---|
| Example 1 | 96,000 µg | 95,000 µg |
| Comparative Example 1 | 0 µg | 0 µg |

As shown in Table 1, in a membrane humidifier including the hollow fiber membrane of Example 1, it was confirmed that the amount of the antioxidant decreased after 1,000 hours of driving of the fuel cell. This suggests that the antioxidant was delivered from the membrane humidifier into a fuel cell stack. In Comparative Example 1, although an antioxidant was included in the dope stock solution, it was confirmed that an antioxidant was not included inside a finally manufactured membrane humidifier. This suggests that, in order to retain an antioxidant inside the hollow fiber membrane during a membrane forming process, a mixing ratio of a core solution is important.

### Evaluation example 2

Humidifier modules including the hollow fiber membranes prepared in Example 1 and Comparative Example 2 were manufactured and mounted on a fuel cell system. Before the humidifier modules were driven, and after the humidifier modules were driven for 1,000 hours, the gas permeability of a polymer electrolyte membrane in a stack was measured using the following method and shown in Table 2.

### [Method of measuring gas permeability of polymer electrolyte membrane]

The gas permeability of the polymer electrolyte membrane is measured by cutting the polymer electrolyte membrane into a circular shape with a diameter of 50 mm, mounting the polymer electrolyte membrane on a measuring jig, and applying hydrogen gas at a pressure of 0.5 bar to measure an amount of hydrogen that permeates through the polymer electrolyte membrane.

**[Table 2]**

| | Gas permeability of polymer electrolyte membrane after 1,000 hours of driving | Reduction rate compared to comparative example 2 |
|---|---|---|
| Comparative Example 2 | 0.030 cc/min.m² | Control group |
| Example 1 | 0.020 cc/ min.m² | About 30 % |

As shown in Table 2, it was confirmed that since the polymer electrolyte membrane in a fuel cell stack receiving an antioxidant from a membrane humidifier exhibited suppressed chemical deterioration by oxidative materials, the gas permeability was decreased by about 30 % as compared to Comparative Example 2 in which an antioxidant was not replenished.

It was confirmed that when the hollow fiber membrane prepared according to Example 1 was applied to a membrane humidifier and used in a fuel cell system, the membrane humidifier served to supply an antioxidant into a fuel cell stack, thereby preventing chemical deterioration of the polymer electrolyte membrane in the fuel cell stack.

## Claims

1. A hollow fiber membrane for a fuel cell humidifier, the hollow fiber membrane comprising:
a polymer; and
an antioxidant,
wherein the antioxidant is disposed on an inner surface and/or an outer surface.

2. The hollow fiber membrane of claim 1, wherein the polymer forms a network structure, and
the antioxidant is dispersed within the network structure.

3. The hollow fiber membrane of claim 1, wherein when a fuel cell is driven, the antioxidant flows out from the hollow fiber membrane in an amount of 1 µg or more for 1,000 hours.

4. The hollow fiber membrane of claim 1, wherein the polymer comprises a polyvinylidene fluoride (PVDF)-based polymer, a polysulfone-based polymer, a sulfonated polysulfone, cellulose acetate, cellulose triacetate, polymethyl methacrylate, Nafion, a polystyrene (PS)-based polymer, a polytetrafluoroethylene (PTFE)-based polymer, a perfluorosulfonic acid (PFSA)-based polymer, a polyphenylsulfone (PPSU)-based polymer, a polyethersulfone (PES)-based polymer, a polyacrylonitrile (PAN)-based polymer, a polyetherimide (PEI)-based polymer, a polyimide (PI)-based polymer, or any combination thereof.

5. The hollow fiber membrane of claim 4, wherein the polymer comprises a polysulfone-based polymer, a sulfonated polysulfone, a PS-based polymer, a PES-based polymer, or any combination thereof.

6. The hollow fiber membrane of claim 1, wherein the polymer is included in an amount of 90 parts by weight or more and less than 100 parts by weight, with respect to 100 parts by weight of the hollow fiber membrane.

7. The hollow fiber membrane of claim 1, wherein the antioxidant comprises a phenol-based antioxidant, an amine-based antioxidant, a metal-based antioxidant, an organo-metallic antioxidant, a sulfur-based antioxidant, a phosphorus-based antioxidant, or a combination thereof.

8. The hollow fiber membrane of claim 1, wherein the antioxidant is included in an amount of 0.1 to 5 parts by weight with respect to 100 parts by weight of the polymer.

9. The hollow fiber membrane of claim 1, further comprising polyvinylpyrrolidone.

10. A method of preparing a hollow fiber membrane for a fuel cell humidifier, the method comprising:
preparing a dope solution for forming a hollow fiber membrane comprising a polymer and an antioxidant;
discharging the dope solution into a coagulation bath through a tubular spinning device; and
coagulating, in the coagulation bath, a spinning solution which has been discharged into the coagulation bath, and then winding and drying the spinning solution to obtain the hollow fiber membrane,
wherein the antioxidant is disposed on an inner surface and/or an outer surface of the hollow fiber membrane.

11. The method of claim 10, comprising preparing the dope solution by mixing the polymer and the antioxidant in an organic solvent,
wherein a spinning dope solution is obtained by mixing the antioxidant in an amount of 0.01 to 5 parts by weight with respect to 100 parts by weight of the polymer.

12. The method of claim 10, wherein the tubular spinning device comprises, in a hollow portion, a core solution comprising a mixed solution of a second solvent and a third solvent in a volume ratio of 3:7 to 7:3,
the second solvent comprises water, methanol, ethanol, isopropanol, acetone, hexane, pentane, benzene, toluene, carbon tetrachloride, o-dichlorobenzene, polyethylene glycol, or a combination thereof, and
the third solvent comprises N-methyl-2-pyrrolidone, dimethyl sulfoxide, dimethylacetamide, dimethylformamide, methyl ethyl ketone, tetrahydrofuran, tetramethylurea, trimethyl phosphate, or a combination thereof.

13. The method of claim 12, wherein the core solution further comprises an antioxidant.

14. A humidifier for a fuel cell, comprising the hollow fiber membrane of any one of claims 1 to 9.

15. A fuel cell system comprising:
a fuel cell stack comprising a fuel cell which comprises a polymer electrolyte membrane; and
the humidifier of claim 14, in communication with the fuel cell stack,
wherein an antioxidant flows out from the humidifier and flows into the fuel cell stack at a rate of 1 µg/1,000 hr or more.
